Europäisches Patentamt

European Patent Office

Office européen des brevets

(19)

(11) **EP 1 575 303 A1**

(12) **EUROPEAN PATENT APPLICATION**

(43) Date of publication:
**14.09.2005 Bulletin 2005/37**

(51) Int Cl.⁷: **H04N 9/04**, H04N 3/15

(21) Application number: **04251384.6**

(22) Date of filing: **10.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(71) Applicant: **Bolymedia Holdings Co. Ltd
Hong Kong (CN)**

(72) Inventor: **Hu, Xiaoping
San Jose, CA 95132 (US)**

(74) Representative: **W.P. Thompson & Co.
55 Drury Lane
London WC2B 5SQ (GB)**

Remarks:
Claims 11,12, 13, 14, 15, 18, 19, 20, 22, 25, 26, 27, 31, 32, 33, 34, 36, 37 AND 38 are deemed to be abandoned due to non-payment of the claims fees (Rule 31 (2) EPC).

(54) **Color filter patterns for image sensors**

(57) Color filter patterns are invented for coating an array of imaging sensing elements so to obtain color images. Each of the color filter patterns consists of a luminance color Y and two other complementary or non-overlapping colors tessellated in a Bayer pattern, hexagonal pattern, YUV422 pattern, or other ordered tessellation. In two preferred embodiments of the invention, the color filter pattern differs from a conventional Bayer Pattern or a conventional hexagonal RGB pattern only in that the G color is replaced by a luminance color Y but with varied pixel sizes. The color filter for luminance Y can be realized by a transparent coating or no coating at all. In addition, the effective sensing areas of different colors are so chosen that desired signal-to-noise ratios are obtained by adjusting the color sensing areas and/ or the sizes/curvatures of the micro lenses for the color pixels.

EP 1 575 303 A1

**Description**

BACKGROUND OF THE INVENTION

1. Field of the Invention

This invention relates to color image sensors that converts optical illumination into electrical signal arrays. More particularly, this invention is related to a new color filter pattern for an image sensor to improve color image sensing sensitivity and total image quality when perceived from human eyes by adjusting signal to noise ratio of different colors.

2. Description of the Related Art

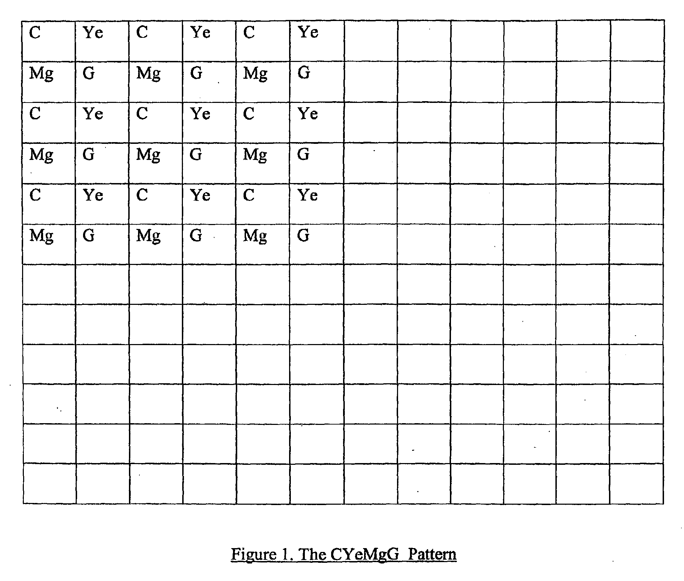

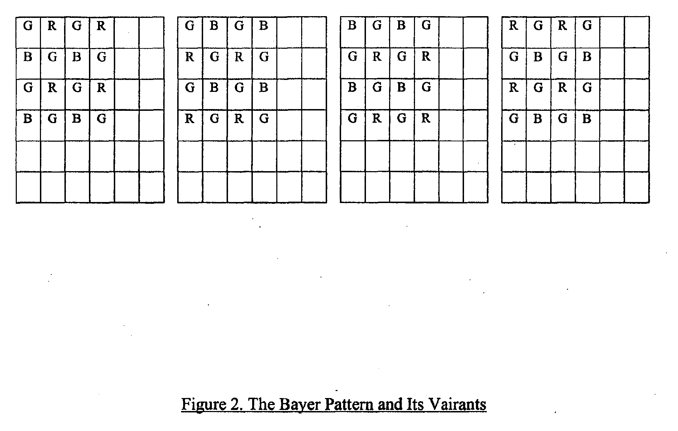

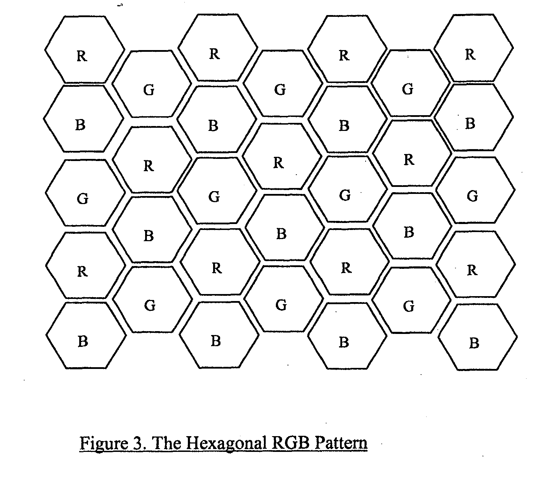

Conventional technologies of designing and manufacturing color image sensors are still confronted with several technical difficulties and limitations. More specifically, color image sensors implemented with current technologies are still hindered by low level of sensing sensitivities, limited spatial resolutions and problems associated with color aliasing. Generally, an image sensor is applied for sensing either black and white or color images. The invention of this Application is related to color image sensors. There are several different technologies implemented for the color image sensors to generate color images from a single array of sensing elements. The most commonly used method in a color image sensor is to coat on the surface of a sensing array with a special pattern of different color filters. Conventional color image sensors apply two kinds of color filter patterns. Fig. 1 shows the first color filter pattern, i.e., the CYeMgG Pattern (or complementary color filter pattern), comprising C (Cyan), Ye (Yellow), Mg (Magenta), G (Green) pattern. Figs. 2 and 3 show another kind of color filter patterns that utilize primary color filters, comprising R (Red), G (Green), and B (Blue), arranged in either a Bayer Pattern shown in Figure 2 or a Hexagonal RGB Pattern as that shown in Fig. 3.

In a color image sensor implemented with the CYeMgG Pattern, the sensing element array is formed by a plurality of macro pixels, with each macro pixel consisting of 4 (elementary) pixels. Each pixel is coated with a single color, either C, or Ye, or Mg, or G. However, since the display industry commonly uses the primary color pattern, i.e., RGB (red, green, blue) colors, instead of a CYeMgG pattern, therefore, conversion of a CYeMgG color pattern into a RGB color pattern is carried out by performing the color matrix operations. Furthermore, since each pixel contains only one color (either C, or Ye, or Mg, or G), in order to obtain other (R, G, and B) colors for the same pixel, interpolation methods are used to generate the missing colors from neighboring pixels. For an image sensor implemented with a Bayer Pattern (US Patent#3,971,065), the sensing element array is also formed by a plurality of macro pixels, with each macro pixel consisting of four pixels coated with either R, or G, or B color filter. A Bayer Pattern further requires that among each macro pixel, two pixels in either diagonal direction must be coated with G or Luminance and the other two pixels must be coated with B and R or two other colors sensitive to DIFFERENT spectral regions. Again since each pixel contains only one color (either R, or G, or B), in order to obtain other (two) colors for the same pixel, interpolation methods are used to generate the missing colors from neighboring pixels. Bayer pattern has four different geometric structures, with R, G, B located in different locations in the four pixels. Referring to Fig. 3 again for the Hexagonal RGB Pattern, a macro pixel contains only three sensing pixels of R, G, and B wherein each element is tessellated in hexagonal fashion. The R, G, B colors are equally and evenly placed in the sensing array. Interchanging the positions of two colors still form a Hexagonal RGB Pattern.

As discussed above, the color filter technologies that implement either the CYeMgG Pattern, Bayer Pattern, or Hexagonal RGB Pattern have at least three common technical difficulties. A first difficulty is the reduction of sensing sensitivities caused by the use of multiple layers of filters when compared to black and white sensors. The second difficulty is the reduction of effective spatial resolution due to the need of color interpolation. The requirement of color interpolation also introduces the third difficulty of color aliasing, which can be solved, typically, by low pass filtering, that however leads to reduction in image sharpness.

In order to improve the overall sensing sensitivity, US Patent 6,137,100 discloses a method by balancing the responses from sensing the three primary colors R, G, and B by taking into consideration of the fact that the color sensitivities of the photodiodes are different, specifically, the photodiodes are most sensitive to green then to red and lastly least sensitive to blue. The Patented method thus provides largest sensing area to blue pixels, and the second largest sensing area to red pixels, and the least sensing area to green pixels. However, the improvements in color sensing sensitivity achieved by this technique are still quite limited and also the methods are only applicable to the image sensor implemented with the color filters of RGB color patterns.

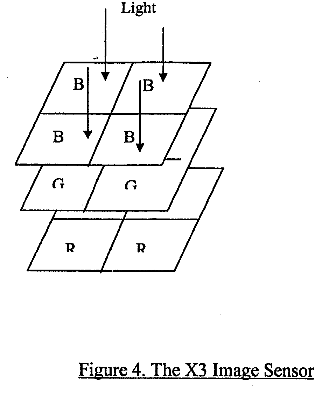

In order to avoid a requirement of color interpolations, a new color image sensor produced by Foveon is implemented with a three-layer image sensor as that shown in Fig.4. This three-layer color sensor, designated by a model number as "X3 image sensor", contains three layers of sensing array, with each layer sensing R, G, or B light spectrum respectively. The X3 image sensor is able to resolve the difficulties caused by color interpolation, but generates new problems due to the difference of the sensing sensitivities between different layers. The sensing sensitivity of a lower layer is smaller than that of the top layer. Therefore, the overall effective sensing sensitivity is further reduced. Additionally, the production yields are degraded as three layers of sensor are manufactured and assembled by using more complicate and time consuming manufacturing processes. Furthermore, there are three times of data to be processed and that places additional demand on data transfer and data processing rates and causes a significant increase of the production costs of the entire system implemented with this X3 image sensor.

Therefore, a need still exists to provide new and improved techniques and methods for designing and manufacturing a color image sensor to resolve these technical difficulties.

## SUMMARY OF THE PRESENT INVENTION

An object of this invention is to provide a new color filter pattern for color image sensors. The image sensor implemented with this new color filter pattern provides an improved color image sensing sensitivity and image sharpness compared with the traditional CYeMgG pattern, Bayer pattern, or hexagonal pattern. Therefore, the limitations and difficulties as those encountered in the prior art are resolved.

In a first aspect of the invention, the color filter patterns contain three colors, and one of these three colors is the luminance of the whole interested spectrum (e.g., the white color in the visible light spectrum) commonly designated as Y. This color is designated as the leading color. The color filter for luminance is realized by either a transparent coating or by applying no coating at all to the filter.

In a second aspect of the invention, besides the luminance filter, the image sensor includes two other color filters that can be of any two complementary colors or two primary colors, designated as secondary colors and labeled as S and Q for ease of description in this Application. For example, S can be Yellow, and Q can be Cyan, or S can be Red and Q be Blue. The color filter for a particular color, e.g., Yellow, is realized by a coating material or pigments that pass light spectrum corresponding to that particular color, e.g., Yellow.

In a third aspect of the invention, irrespective of which form of tessellation is used, the leading color Y must be coated on at least the same number of pixels than each of the secondary colors S and Q while S is coated on about the same number of pixels as Q. The new color filter pattern may be applied in many different forms of tessellation including, but not restricted to, the conventional Bayer Pattern tessellation as that shown in Fig. 5, hexagonal tessellation as that shown in Fig. 7, or the YUV422 tessellation as that shown in Fig. 9.

In a fourth aspect of the invention, the sensing areas of the pixels or surface areas of the micro lenses on the pixels are designed such that the three kinds of sensing elements for Y, S, and Q colors have the desired signal to noise ratios (SNR) for the lighting condition of particular applications implemented with the image sensor of this invention.

Briefly in a preferred embodiment this invention discloses a method for generating a color filter pattern for a macro pixel of four elementary pixels. The color filter pattern includes a luminance color Y and two other colors S and Q organized in ordered tessellation. The tessellation includes Bayer tessellation and YUV422 tessellation. The YUV422 tessellation is widely used as YUV422 format in TV industry where YUV data are organized in YUYV interleave format. The method includes a step of coating the color filter pattern on top of a macro pixel with color Y on two elementary sensing pixel elements, and S and Q each on top of one elementary sensing pixel element. The method further includes a step of replicating the macro pixel with the said color filter pattern in the tessellation horizontally and vertically so to obtain an image sensor array.

These and other objects and advantages of the present invention will no doubt become obvious to those of ordinary skill in the art after having read the following detailed description of the preferred embodiments, which are illustrated in the various drawing figures.

## BRIEF DESCRIPTION OF THE DRAWINGS

Figure 1 is a diagram of a CYeMgG color filter pattern;

Figures 2 is a diagram of RGB Bayer color filter pattern and the variants;

Figure 3 is a diagram of the Hexagonal RGB color filter pattern;

Figure 4 is a diagram for showing the three-layer color filter technique implemented by Foveon, Inc. in a X3 image sensor;

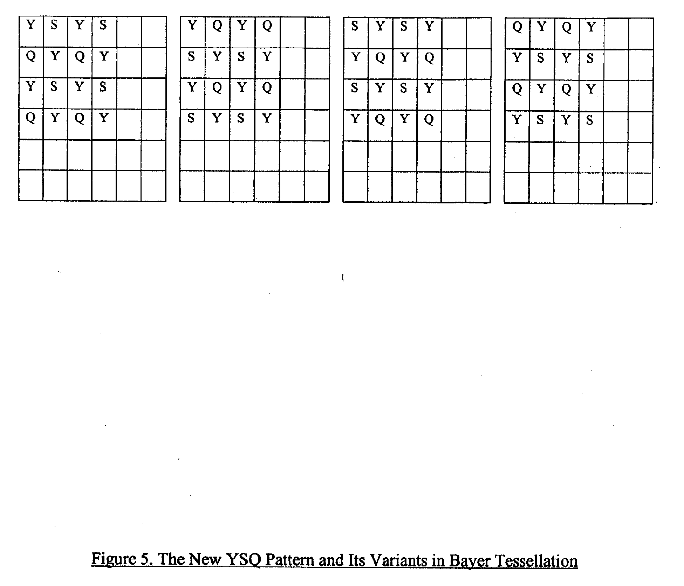

Figure 5 is a diagram for illustrating the YSQ color filter pattern according to a Bayer Tessellation and its variants according to the present invention;

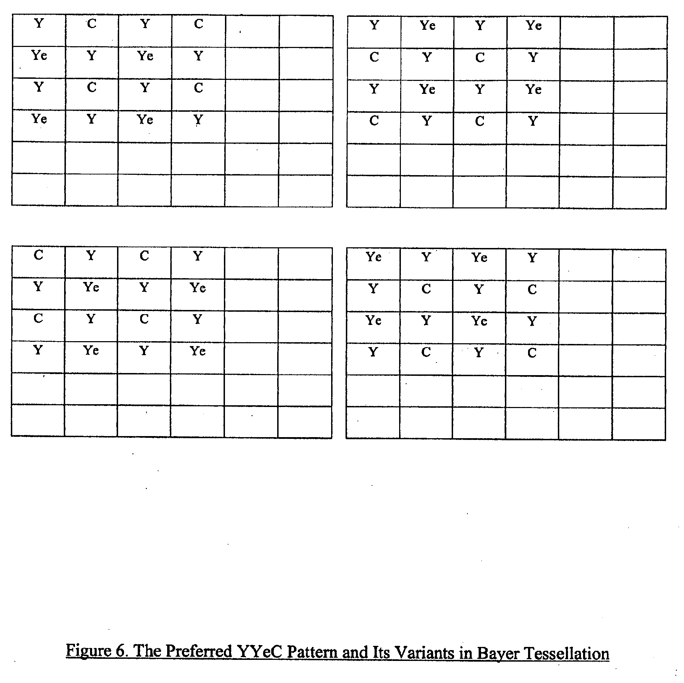

Figure 6 shows a preferred embodiment implemented with YYeC color filters of this invention arranged according to a Bayer tessellations;

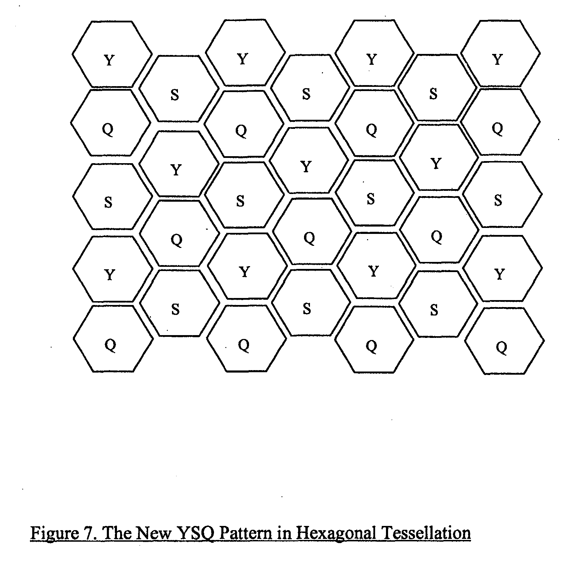

Figure 7 is a diagram for illustrating an alternated preferred embodiment of this invention implemented with YSQ color filters arranged according to a Hexagonal Tessellation;

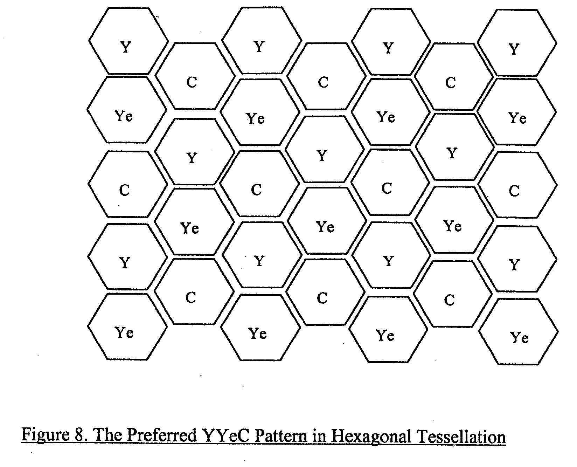

Fig. 8 is a diagram for illustrating an alternated preferred embodiment of this invention implemented with YYeC color filters arranged according to a Hexagonal Tessellation;

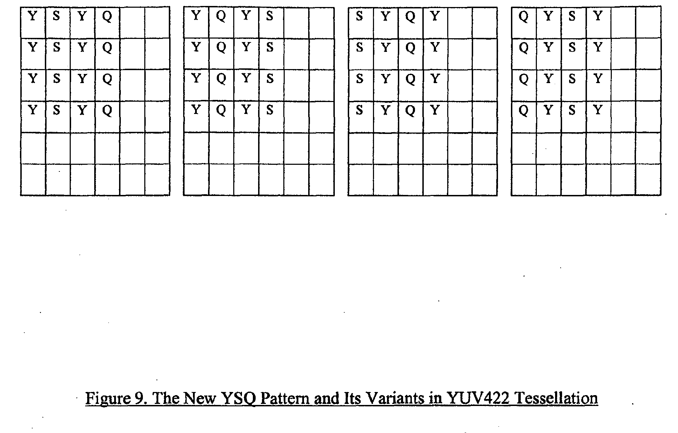

Figure 9 is a diagram of the newly invented YSQ color filter in different forms of YUV422 Tessellation;

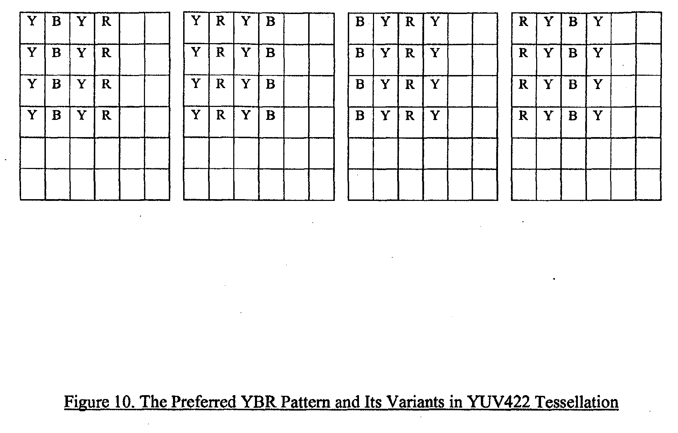

Figure 10 is a diagram for illustrating an alternated preferred embodiment of this invention implemented with YBR color filters arranged according to different forms of YUV422 Tessellation;

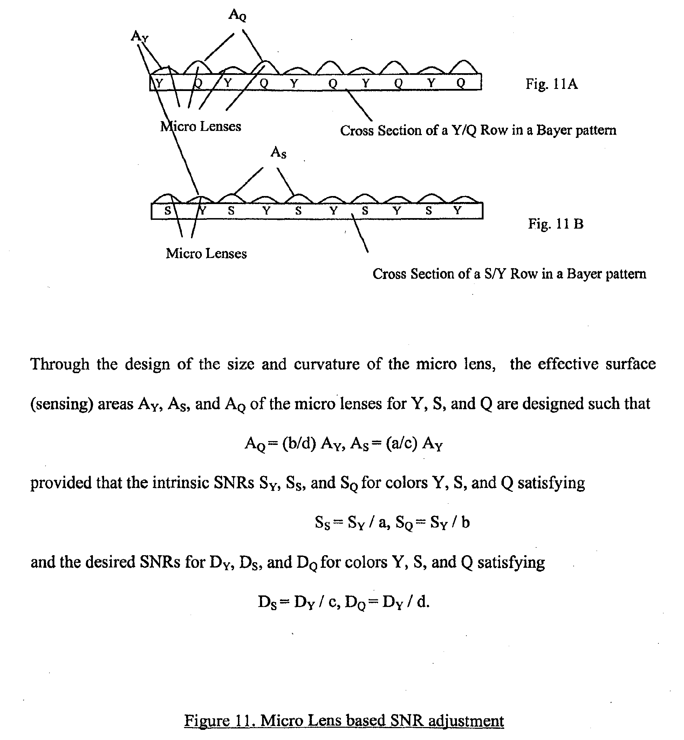

Figures 11A and 11B show cross sectional views of image sensors implemented with micro-lenses wherein the SNRs of different color pixels are adjusted to the desired values by applying a micro-lens based SNR adjustment method through size and curvature variations of micro-lenses to change effective sensing areas;

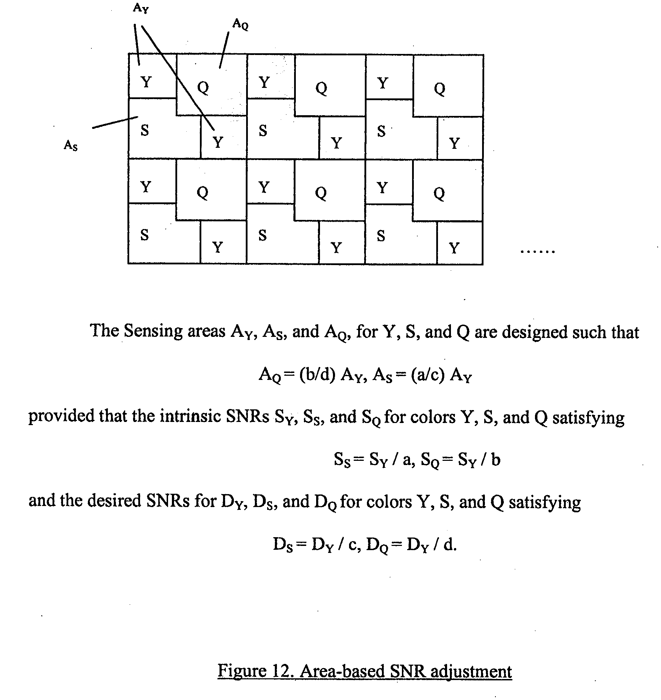

Figure 12 is an area diagram for illustrating an area-based SNR adjustment method to adjust the SNRs of different color pixels to the desired values.

## DETAILED DESCRIPTION OF THE PREFERRED EMBODIMENTS

Referring to Figs. 5A to 5D for four different color filter patterns respectively wherein each pattern includes a plurality of luminance filters designated as Y and two other color filters designated as S and Q. The Y color filters for sensing luminance, i.e., white light, are leading color filters and the S and Q filters are secondary color filters. The secondary color filters S and Q can be implemented with two complementary color filters or two primary color filters. Compared to the number of pixels coated with S and Q color filters, luminance color filters as shown are coated on number of pixels equal to or more than that coated on either the S or Q color filters. The number of pixels coated with S color filters is about the same as the number of pixels that coated with Q color filters.

Referring to Fig. 6A to 6D, two secondary colors S and Q are chosen to be Yellow (Ye) and Cyan (C)respectively and Y, S, and Q are organized in a Bayer pattern. With this preferred embodiment, the color filter pattern differs from the conventional Bayer pattern only in that Green color filter is replaced by White color filter, Red by Yellow, and Blue by Cyan. Compared to the conventional Bayer pattern, the color sensor as shown in Fig. 6 requires significant changes to generate color images. The changes are required because the sensed three colors Y, S and Q, e.g., Y, Ye, and C, do not form a color space and they have never been used together in image sensors. For this reason, the color filter patterns as shown in Figs. 5 and 6 require the internal color processing circuits to change correspondingly. Additionally, different color interpolation methods and matrix operations are needed to recover R, G, B colors from Bayer patterned now sensed as Y, S, Q, e.g., Y, Ye, C colors.

This seemingly simple change to the color filter patterns as shown in Figs. 5 and 6, provides great advantages. First of all, the white color Y has much higher sensitivity than green color, and yellow and cyan have much higher sensitivity than red and blue respectively.

The color image sensor configured according to the color filter pattern as shown can achieve much improved sensing sensitivity. Especially, since human eyes are more sensitive to luminance than chrominance and since there are more luminance components than other color components, for a human viewer the image sharpness is increased. Second, both yellow and cyan are complementary colors and therefore do not represent chrominance colors (B and R) directly. As a consequency, the chrominance components need to be indirectly derived from color interpolation.

Figs. 7 and 8 show a second set of preferred embodiment where the YSQ patterns are implemented in Fig. 7 according to a hexagonal tessellation. In Fig. 8, the YSQ color filter pattern is again arranged according to a hexagonal tessellation with S chosen as Yellow and Q chosen as Cyan. In this tessellation, Y, Ye, and C have about the same number of pixels. Meanwhile, in order to achieve better signal to noise ratios as will be discussed below, the sensing areas may be configured differently by providing either different filter areas or using micro lenses of different curvatures.

Figs. 9 and 10 show a third set of preferred embodiment where the YSQ patterns are implemented in Fig. 9 according to a YUV422 tessellation. In Fig. 10, the YSQ color filter pattern is again arranged according to a YUV422 tessellation with S chosen as R and Q chosen as B. In this embodiment, the Y, B, and R colors are used for coating the pixels and these pixels are arranged in horizontally interleaved tessellation including either Y | B | Y | R, Y | R | Y | B, B | Y | R | Y, or R | Y | B | Y. Compared with the horizontal resolution, the vertical resolution is twice as higher for Y, and four times higher for B and R. In order to have a more balanced resolution, different methods are implemented. As a first exemplary implementation, the combined width of a macro pixel Y | B | Y | R, is arranged as twice as the height of a Y pixel. In a second exemplary implementation, instead of four pixels, two (R, G, B) pixels are produced through interpolation from each macro pixel Y | B | Y | R. Because of the similarity with the YUV422 format widely used in the TV industry, this preferred embodiment is particularly useful for video sensors. Even this embodiment has similar tessellations as that shown in US Patent 6,346,969, the invention as disclosed in this Application has superior image quality because of the improved effective sensing sensitivity by utilizing an improved Y-S-Q color filters instead of the conventional RGB color filters when compared with US Patent 6,346,969.

In all three different tessellations, as those shown in Figs. 5 to 10, there are more or about same Y pixels when compared to S and Q pixels. Meanwhile, the S and Q pixels have about the same numbers of pixels.

The color image sensor has broad applications. For example, a digital camera can achieve immediate image quality improvement by utilizing a color image sensor as disclosed in this invention. Typically, a digital camera can easily achieve acceptable signal to noise ratio for an outdoor situation. However, in a low light condition such as the requirements for taking an indoor picture, conventional color image sensors often experience difficulties to provide sufficient image sensing sensitivity. In a low light environment, the SNR for a sensing element highly depends on the color coating and semiconductor processing technology of the sensing element (e.g., a photo diode). Normally, luminance Y has the highest SNR among all colors. Suppose that S has a higher SNR than Q. Let $S_Y$, $S_S$, $S_Q$, be the intrinsic SNR of the sensing element for color Y, S, and Q respectively. The intrinsic SNR of a color is defined as the SNR of the color at unit sensing area. Typically the signal to noise ratio can be calculated as:

$$S_S = S_Y / a, S_Q = S_Y / b, (b >= a > 1.0).$$

If the desired SNRs for Y, S, and Q are $D_Y$, $D_S$, $D_Q$ respectively with

$$D_S = D_Y / c, D_Q = D_Y / d,$$

Then sensing areas or the surface areas of the micro lenses for the Y, S, and Q pixels are chosen such that a S pixel collects a/c times more photons than a Y pixel, and a Q pixel collects b/d times more photons than a Y pixel. Furthermore, it is noted that:

$$a/c = (S_Y / S_S) / (D_Y / D_S) = (S_Y \cdot D_S) / (S_S D_Y)$$

$$b/d = (S_Y / S_Q) / (D_Y / D_Q) = (S_Y \cdot D_Q) / (S_Q \cdot D_Y)$$

The difference between sensing areas or surface areas of the micro lenses between a color pair S and Y, or Q and Y, is determined by both the desired and intrinsic SNRs of S and Y, or those of Q and Y. As shown in Fig. 11, the desired SNRs are achieved by adjusting surface areas or curvatures of the micro lenses for different colors. These drawings are exemplary and are not intended to limit the scope of this invention. The method of using the micro lenses for sensing areas adjustment can be either used independently or together with the sensing area adjustment method described below.

Fig. 12 shows a method that achieves desired SNRs by adjusting sensing areas of different color pixels. Compared to the disclosure made in US Patent 6,137,100, the SNR balancing techniques are different. The balancing techniques as disclosed by US Patent 6,137,100 is only applied to the conventional R-G-B color space and the Bayer tessellation, while the balance of this invention is applied to the Y-S-Q color space for all different kinds of tessellations. Furthermore, the SNR balancing method of this invention is not to equalize the color light photons received for R, G, and B pixels respectively, but to achieve the desired SNRs for Y, S, and Q respectively. The technique of this invention can produce better image quality for human eyes. The better image qualities are achieved because the human eyes are more sensitive to luminance than to chrominance. For this reason, the desired SNR for Y is higher than the desired SNRs for S and Q. Instead of adjusting even intensity of the R-G-B colors, a more sensible adjustment is to adjust the SNRs for better viewing as that most suitable for human eyes when looking from a human perspective. Other than the changes of planar sensing areas as shown in Fig. 12, additional sensing area adjustment can be achieved by using micro lenses on different color filters as that shown in Fig. 11 with micro lenses of different sizes and curvatures. The SNRs can therefore be flexibly adjusted to achieve best image quality by combining planar sensing area variations together with micro lens adjustments.

In summary, this invention discloses an improved color image sensor implemented with a color filter pattern that has a leading color, the luminance (or white color as in the visible light spectrum) Y of the whole interested spectrum, and two other secondary colors S and Q each corresponding to one segment of the interested spectrum. The secondary colors S and Q can be chosen from any two of the primary colors R, G, and B, or from any complementary color pairs out of C, Ye, Mg, and G, or from two other specifically desired colors (e.g., an infrared color and an ultraviolet color) for special applications. The leading color is applied to about the same or more number of pixels than each of the secondary colors. The color filter pattern can have any form of tessellation, including, but not restricted to, Bayer pattern tessellation, hexagonal tessellation, or YUV422 tessellation. The sensing areas and/or surface areas or curvature of the micro lenses of the color pixels are so chosen to achieve desired SNRs for the color pixels. This inventions thus uses a different color filter pattern to improve the sensitivity and increase image sharpness without the side effects of the X3 method. In addition, the method can be used to produce YUV sensors in very simple ways.

Although the present invention has been described in terms of the presently preferred embodiments, it is to be understood that such disclosure is not to be interpreted as limiting. Various alterations and modifications will no doubt become apparent to those skilled in the art after reading the above disclosure. Accordingly, it is intended that the appended claims be interpreted as covering all alterations and modifications as fall within the true spirit and scope of the invention.

**Claims**

1. A color image sensor comprising:

at least a first color filter for sensing a luminance from an entire spectrum relevant to said color image sensor.

2. The color image sensor of claim 1 further comprising:

a second filter of a second color and a third filter of a third color wherein said second and third colors correspond two overlapping segments of said entire spectrum.

3. The color image sensor of claim 1 further comprising:

a plurality of first color filters for sensing a luminance from an entire spectrum relevant to said color sensor;

a plurality of second filters of a second color and a plurality of third filter of a third color wherein said second and third colors correspond two overlapping segments of said entire spectrum.

4. The color image sensor of claim 3 wherein:

said color image sensor having more or an about same number of filters of said first color than said filters of said second color and said filters of said third color.

5. The color image sensor of claim 3 wherein:

said filters of said first color and said filters of said second and third colors are configured according to a Bayer tessellation.

6. The color image sensor of claim 3 wherein:

said filters of said first color and said filters of said second and third colors are configured according to a hexagonal tessellation.

7. The color image sensor of claim 3 wherein:

said filters of said white color and said filters of said second and third colors are configured according to a YUV422 tessellation.

8. A color image sensor of claim 1 wherein:

said first color filter is for sensing a luminance from an entire spectrum of a visible color for a human eye.

9. The color image sensor of claim 8 further comprising:

a second filter of a second color, and a third filter of a third color wherein said second and third colors are two complementary visible colors for a human eye.

10. The color image sensor of claim 8 further comprising:

a second filter of a yellow color, and a third filter of a cyan color.

11. The color image sensor of claim 8 further comprising:

a plurality of white color filters for sensing a luminance from an entire spectrum of a visible color for a human eye;

a plurality of second filters of a second color and a plurality of third filter of a third color wherein said second and third colors are two different complementary colors to the primary colors.

12. The color image sensor of claim 11 wherein:

said color image sensor having more or an about same number of filters of said white color than said filters of said second color and said filters of said third color.

13. The color image sensor of claim 11 wherein:

said filters of said white color and said filters of said second and third colors are configured according to a Bayer tessellation.

14. The color image sensor of claim 11 wherein:

said filters of said white color and said filters of said second and third colors are configured according to a hexagonal tessellation.

15. The color image sensor of claim 11 wherein:

said filters of said white color and said filters of said second and third colors are configured according to a YUV422 tessellation.

16. The color image sensor of claim 3 wherein:

said color image sensor is configured with a set of desired signal-to-noise ratios of said first color and said second and third colors by adjusting a first area covered by said first filters of said first color and a second and third areas covered by said second and third filters of said second and third colors respectfully.

**17.** The color image sensor of claim 3 wherein:

said color image sensor is configured with a set of desired signal-to-noise ratios of said first color and said second and third colors by adjusting a first effective sensing area of the micro lens of said first filters of said first color and a second and third effective sensing areas of said second and third filters of said second and third colors respectfully wherein each of said second and third filters covered by a micro lens.

**18.** The color image sensor of claim 11 wherein:

said color image sensor is configured with a set of desired signal-to-noise ratios of said luminance and said second and third colors by adjusting a first area covered by said first filters of said luminance and a second and third areas covered by said second and third filters of said second and third colors respectfully.

**19.** The color image sensor of claim 11 wherein:

said color image sensor is configured with a set of desired signal-to-noise ratios of said luminance and said second and third colors by adjusting a first effective sensing area of the micro lens of said first filters of said luminance and a second and third effective sensing areas of said second and third filters of said second and third colors respectfully wherein each of said second and third filters covered by a micro lens.

**20.** A color image sensor comprising:

at least a first color filter for sensing a luminance from an entire spectrum relevant to said color image sensor.

**21.** The color image sensor of claim 1 further comprising:

a second filter of a second color and a third filter of a third color wherein said second and third colors correspond two non-overlapping segments of said entire spectrum and the sensing pixels of the said second and third colors have different effective optical sensing areas from that of the pixels of the said first color.

**22.** The color image sensor of claim 20 further comprising:

a plurality of first color filters for sensing a luminance from an entire spectrum relevant to said color sensor;

a plurality of second filters of a second color and a plurality of third filter of a third color wherein said second and third colors correspond two non-overlapping segments of said entire spectrum and the sensing pixels of the said second and third colors have different effective optical sensing areas from that of the pixels of the said first color.

**23.** The color image sensor of claim 22 wherein:

said color image sensor having more or an about same number of filters of said first color than said filters of said second color and said filters of said third color.

**24.** The color image sensor of claim 22 wherein:

said filters of said first color and said filters of said second and third colors are configured according to a Bayer tessellation.

**25.** The color image sensor of claim 22 wherein:

said filters of said first color and said filters of said second and third colors are configured according to a hexagonal tessellation.

**26.** The color image sensor of claim 22 wherein:

said filters of said white color and said filters of said second and third colors are configured according to a YUV422 tessellation.

**27.** A color image sensor of claim 20 wherein:

said first color filter is for sensing a luminance from an entire spectrum of a visible color for a human eye.

**28.** The color image sensor of claim 27 further comprising:

a second filter of a second color, and a third filter of a third color wherein said second and third colors are two different primary visible colors for a human eye.

**29.** The color image sensor of claim 27 further comprising:

a second filter of a red color, and a third filter of a blue color.

**30.** The color image sensor of claim 27 further comprising:

a plurality of first color filters for sensing a luminance from an entire spectrum of a color for a human eye;

a plurality of second filters of a second color and a plurality of third filter of a third color wherein said second and third colors are two primary colors and the sensing pixels of the said second and third colors have different effective optical sensing areas from that of the pixels of the said first color.

**31.** The color image sensor of claim 27 wherein:

said color image sensor having more or an about same number of filters of said white color than said filters of said second color and said filters of said third color.

**32.** The color image sensor of claim 27 wherein:

said filters of said white color and said filters of said second and third colors are configured according to a Bayer tessellation.

**33.** The color image sensor of claim 27 wherein:

said filters of said white color and said filters of said second and third colors are configured according to a hexagonal tessellation.

**34.** The color image sensor of claim 27 wherein:

said filters of said white color and said filters of said second and third colors are configured according to a YUV422 tessellation.

**35.** The color image sensor of claim 22 wherein:

said color image sensor is configured with a set of desired signal-to-noise ratios of said first color and said second and third colors by adjusting a first area covered by said first filters of said first color and a second and third areas covered by said second and third filters of said second and third colors respectfully.

**36.** The color image sensor of claim 22 wherein:

said color image sensor is configured with a set of desired signal-to-noise ratios of said first color and said second and third colors by adjusting a first effective sensing area of the micro lens of said first filters of said first color and a second and third effective sensing areas of said second and third filters of said second and third colors respectfully wherein each of said second and third filters covered by a micro lens.

**37.** The color image sensor of claim 30 wherein:

said color image sensor is configured with a set of desired signal-to-noise ratios of said luminance and said second and third colors by adjusting a first area covered by said first filters of said luminance and a second and third areas covered by said second and third filters of said second and third colors respectfully.

**38.** The color image sensor of claim 30 wherein:

said color image sensor is configured with a set of desired signal-to-noise ratios of said luminance and said second and third colors by adjusting a first effective sensing area of the micro lens of said first filters of said luminance and a second and third effective sensing areas of said second and third filters of said second and third colors respectfully wherein each of said second and third filters covered by a micro lens.

**39.** A color image sensor comprising:

a plurality of color filters of different colors wherein tessellation of said color filters of said different colors is configured for achieving substantially a desired signal-to-noise ratio for each of said colors.

| C | Ye | C | Ye | C | Ye | | | | | | |
|---|----|---|----|---|----|---|---|---|---|---|---|
| Mg | G | Mg | G | Mg | G | | | | | | |
| C | Ye | C | Ye | C | Ye | | | | | | |
| Mg | G | Mg | G | Mg | G | | | | | | |
| C | Ye | C | Ye | C | Ye | | | | | | |
| Mg | G | Mg | G | Mg | G | | | | | | |
| | | | | | | | | | | | |
| | | | | | | | | | | | |
| | | | | | | | | | | | |
| | | | | | | | | | | | |
| | | | | | | | | | | | |
| | | | | | | | | | | | |

Figure 1. The CYeMgG  Pattern

| G | R | G | R |  |  |
|---|---|---|---|---|---|
| B | G | B | G |  |  |
| G | R | G | R |  |  |
| B | G | B | G |  |  |
|  |  |  |  |  |  |
|  |  |  |  |  |  |

| G | B | G | B |  |  |
|---|---|---|---|---|---|
| R | G | R | G |  |  |
| G | B | G | B |  |  |
| R | G | R | G |  |  |
|  |  |  |  |  |  |
|  |  |  |  |  |  |

| B | G | B | G |  |  |
|---|---|---|---|---|---|
| G | R | G | R |  |  |
| B | G | B | G |  |  |
| G | R | G | R |  |  |
|  |  |  |  |  |  |
|  |  |  |  |  |  |

| R | G | R | G |  |  |
|---|---|---|---|---|---|
| G | B | G | B |  |  |
| R | G | R | G |  |  |
| G | B | G | B |  |  |
|  |  |  |  |  |  |
|  |  |  |  |  |  |

Figure 2. The Bayer Pattern and Its Vairants

Figure 3. The Hexagonal RGB Pattern

Light

Figure 4. The X3 Image Sensor

| Y | S | Y | S |  |  |
|---|---|---|---|---|---|
| Q | Y | Q | Y |  |  |
| Y | S | Y | S |  |  |
| Q | Y | Q | Y |  |  |
|  |  |  |  |  |  |
|  |  |  |  |  |  |

| Y | Q | Y | Q |  |  |
|---|---|---|---|---|---|
| S | Y | S | Y |  |  |
| Y | Q | Y | Q |  |  |
| S | Y | S | Y |  |  |
|  |  |  |  |  |  |
|  |  |  |  |  |  |

| S | Y | S | Y |  |  |
|---|---|---|---|---|---|
| Y | Q | Y | Q |  |  |
| S | Y | S | Y |  |  |
| Y | Q | Y | Q |  |  |
|  |  |  |  |  |  |
|  |  |  |  |  |  |

| Q | Y | Q | Y |  |  |
|---|---|---|---|---|---|
| Y | S | Y | S |  |  |
| Q | Y | Q | Y |  |  |
| Y | S | Y | S |  |  |
|  |  |  |  |  |  |
|  |  |  |  |  |  |

Figure 5. The New YSQ Pattern and Its Variants in Bayer Tessellation

13

| Y | C | Y | C | | |
|---|---|---|---|---|---|
| Ye | Y | Ye | Y | | |
| Y | C | Y | C | | |
| Ye | Y | Ye | Y | | |
| | | | | | |
| | | | | | |

| Y | Ye | Y | Ye | | |
|---|---|---|---|---|---|
| C | Y | C | Y | | |
| Y | Ye | Y | Ye | | |
| C | Y | C | Y | | |
| | | | | | |
| | | | | | |

| C | Y | C | Y | | |
|---|---|---|---|---|---|
| Y | Ye | Y | Ye | | |
| C | Y | C | Y | | |
| Y | Ye | Y | Ye | | |
| | | | | | |
| | | | | | |

| Ye | Y | Ye | Y | | |
|---|---|---|---|---|---|
| Y | C | Y | C | | |
| Ye | Y | Ye | Y | | |
| Y | C | Y | C | | |
| | | | | | |
| | | | | | |

Figure 6. The Preferred YYeC Pattern and Its Variants in Bayer Tessellation

Figure 7. The New YSQ Pattern in Hexagonal Tessellation

Figure 8. The Preferred YYeC Pattern in Hexagonal Tessellation

| Y | S | Y | Q |  |  |
|---|---|---|---|---|---|
| Y | S | Y | Q |  |  |
| Y | S | Y | Q |  |  |
| Y | S | Y | Q |  |  |
|  |  |  |  |  |  |
|  |  |  |  |  |  |

| Y | Q | Y | S |  |  |
|---|---|---|---|---|---|
| Y | Q | Y | S |  |  |
| Y | Q | Y | S |  |  |
| Y | Q | Y | S |  |  |
|  |  |  |  |  |  |
|  |  |  |  |  |  |

| S | Y | Q | Y |  |  |
|---|---|---|---|---|---|
| S | Y | Q | Y |  |  |
| S | Y | Q | Y |  |  |
| S | Y | Q | Y |  |  |
|  |  |  |  |  |  |
|  |  |  |  |  |  |

| Q | Y | S | Y |  |  |
|---|---|---|---|---|---|
| Q | Y | S | Y |  |  |
| Q | Y | S | Y |  |  |
| Q | Y | S | Y |  |  |
|  |  |  |  |  |  |
|  |  |  |  |  |  |

Figure 9. The New YSQ Pattern and Its Variants in YUV422 Tessellation

Figure 10. The Preferred YBR Pattern and Its Variants in YUV422 Tessellation

Fig. 11A

Cross Section of a Y/Q Row in a Bayer pattern

Fig. 11 B

Cross Section of a S/Y Row in a Bayer pattern

Figure 11. Micro Lens based SNR adjustment

Through the design of the size and curvature of the micro lens, the effective surface (sensing) areas $A_Y$, $A_S$, and $A_Q$ of the micro lenses for Y, S, and Q are designed such that

$$A_Q = (b/d)\, A_Y, \quad A_S = (a/c)\, A_Y$$

provided that the intrinsic SNRs $S_Y$, $S_S$, and $S_Q$ for colors Y, S, and Q satisfying

$$S_S = S_Y / a, \quad S_Q = S_Y / b$$

and the desired SNRs for $D_Y$, $D_S$, and $D_Q$ for colors Y, S, and Q satisfying

$$D_S = D_Y / c, \quad D_Q = D_Y / d.$$

The Sensing areas $A_Y$, $A_S$, and $A_Q$, for Y, S, and Q are designed such that

$$A_Q = (b/d) A_Y, A_S = (a/c) A_Y$$

provided that the intrinsic SNRs $S_Y$, $S_S$, and $S_Q$ for colors Y, S, and Q satisfying

$$S_S = S_Y / a, S_Q = S_Y / b$$

and the desired SNRs for $D_Y$, $D_S$, and $D_Q$ for colors Y, S, and Q satisfying

$$D_S = D_Y / c, D_Q = D_Y / d.$$

Figure 12. Area-based SNR adjustment

**European Patent Office**

**EUROPEAN SEARCH REPORT**

Application Number

EP 04 25 1384

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 0140, no. 36 (E-877), 23 January 1990 (1990-01-23) & JP 1 268285 A (TOKYO ELECTRIC CO LTD), 25 October 1989 (1989-10-25) * abstract * | 1 | H04N9/04 H04N3/15 |
| Y | | 21,23, 24, 28-30,35 | |
| X | PATENT ABSTRACTS OF JAPAN vol. 0163, no. 16 (E-1231), 10 July 1992 (1992-07-10) & JP 4 088786 A (CANON INC), 23 March 1992 (1992-03-23) | 1-5,7 | |
| Y | * abstract * | 16 | |
| X | US 4 580 160 A (INADA JUN ET AL) 1 April 1986 (1986-04-01) * column 4, line 56 - line 68; figure 4 * | 1,6,8-10 | |
| X | US 6 137 100 A (KAPLINSKY MICHAEL ET AL) 24 October 2000 (2000-10-24) * column 1, lines 20-32 * * column 2, line 1 - line 4 * * column 2, line 22 - line 24; figure 1b * | 39 | TECHNICAL FIELDS SEARCHED (Int.Cl.7) H04N |
| Y | | 16,21, 23,24, 28-30,35 | |
| A | PATENT ABSTRACTS OF JAPAN vol. 1997, no. 10, 31 October 1997 (1997-10-31) & JP 9 148549 A (SONY CORP), 6 June 1997 (1997-06-06) * abstract * | 17 | |

The present search report has been drawn up for all claims

| Place of search | Date of completion of the search | Examiner |
|---|---|---|
| The Hague | 17 September 2004 | Bequet, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 25 1384

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2004

| Patent document cited in search report | | Publication date | Patent family member(s) | | Publication date |
|---|---|---|---|---|---|
| JP 1268285 | A | 25-10-1989 | NONE | | |
| JP 4088786 | A | 23-03-1992 | DE | 69127795 D1 | 06-11-1997 |
| | | | DE | 69127795 T2 | 12-02-1998 |
| | | | EP | 0472299 A1 | 26-02-1992 |
| | | | US | 5323233 A | 21-06-1994 |
| US 4580160 | A | 01-04-1986 | JP | 60227587 A | 12-11-1985 |
| US 6137100 | A | 24-10-2000 | WO | 9965248 A1 | 16-12-1999 |
| JP 9148549 | A | 06-06-1997 | NONE | | |

EPO FORM P0459

For more details about this annex : see Official Journal of the European Patent Office, No. 12/82